# EUROPÄISCHE PATENTANMELDUNG

(11) **EP 2 481 276 A1**
(43) Veröffentlichungstag der Anmeldung: **01.08.2012**
(21) Anmeldenummer: 11004644.8
(22) Anmeldetag: 08.06.2011
(51) Int. Cl.: A01D 43/08, F16F 9/42, F16F 9/53, A01F 29/10

(54) **Häckselaggregat für selbstfahrende Erntemaschinen**

(30) Priorität: 01.02.2011 DE 102011009992
(71) Anmelder: CLAAS Saulgau GmbH, 88348 Bad Saulgau (DE)
(72) Erfinder: Rauch, Hans, 88348 Bad Saulgau (DE)

(57) **Zusammenfassung**

Häckselaggregat (1) für selbstfahrende Erntemaschinen, bestehend aus einem Häckslergehäuse (2) mit wenigstens zwei Einzugswalzen, einer oberen und einer unteren Einzugswalze (3,4), welche die Einzugsspaltweite (18,18') begrenzen, und wenigstens zwei Presswalzen, einer oberen und einer unteren Presswalze (5,6), welche die Pressspaltweite (19,19') begrenzen, mit einer umlaufend rotierenden mit Messern besetzten Häckseltrommel (7), wobei die Einzugswalzen (3,4) und die Presswalzen (5,6) sich dem momentanen Gutstrom folgend durch unterschiedliche Einzugsspaltweiten (18,18') bzw. Pressspaltweiten (19,19') anpassen können und wobei die Anpassbewegungen der Einzugs- und Presswalzen (3,4,5,6) von wenigstens einem hydraulischen Stoßdämpfer bedämpft werden, wobei das Häckselaggregat (1) wenigstens einen hydraulischen Stoßdämpfer (27) mit einem hydraulischen Kühlkreislauf (44;45) aufweist.

## Beschreibung

Die Erfindung betrifft ein Häckselaggregat für selbstfahrende Erntemaschinen nach dem Oberbegriff des Anspruchs 1.

Die Häckselaggregate von Feldhäckslern, insbesondere die der selbstfahrenden Erntemaschinen, sind auf Grund stetig anwachsender Leistungsanforderungen, hervorgerufen durch größere Arbeitsbreiten der Maisgebisse oder Pick-up's, und damit notwendigerweise auch in Verbindung mit größeren Leistungen der Antriebsmotore, hohen Anforderungen, hinsichtlich der auf die Arbeitsorgane einwirkenden Kräfte und Drehmomente, unterworfen. Hinzu kommt, dass die Betriebsbedingungen häufig abrupten Änderungen unterworfen sind. Derartige abrupte Änderungen können verursacht werden durch einen diskontinuierlichen Gutfluss, welcher durch das Häckselaggregat hindurchgeht. Auch gibt es diesbezüglich erhebliche Unterschiede von Futterart zu Futterart, zum Beispiel der Wechsel von Mais zu Grünfutter, welches ebenfalls zu wechselnden und unterschiedlichen Einsatzbedingungen führt.

Die Häckselaggregate müssen diesen wechselnden Bedingungen und Anforderungen standhalten. Aus diesem Grunde sind Häckselaggregate so aufgebaut, dass der Einzugsspalt zwischen den Einzugswalzen und der Pressspalt zwischen den Presswalzen unterschiedlich groß sein kann. Dieses kommt der Forderung nach unterschiedlichen Massendurchsatzströmen im laufenden Häckselbetrieb bei möglichst konstanter Schnittlänge des Häckselgutes nach.

Die Schnittlänge des Häckselgutes wiederum ist abhängig von der Drehzahl der mit Messern besetzten Häckseltrommel und auch von der Zuführgeschwindigkeit des Gutstroms, welcher den Einzugs- und Pressspalt der vorgelagerten Einzugs- und Presswalzen des Einzugsgehäuses passieren muss. Daher ist es üblich, sowohl die Drehzahl der Häckseltrommel, als auch die Einzugsgeschwindigkeit des Gutstroms, den unterschiedlichen Betriebsbedingungen anzupassen.

Ungeachtet dieser Anpassungsmöglichkeiten ist der Einzugs- und Pressvorgang des Gutstroms hochdynamischen Veränderungen ausgesetzt, so dass die Einzugs- und Pressorgane, welche als Einzugs- und Presswalzen in dem der Häckseltrommel vorgelagerten Einzugsgehäuse gelagert sind, sich fortlaufend auf momentane Änderungen der Spaltweiten zwischen der jeweiligen Ober- und Unterwalze einstellen müssen. Diesem Umstand wird in bekannter weise dadurch Rechnung getragen, dass die Oberwalzen der Einzugs- und Pressorgane möglichst unabhängig voneinander, momentan gegenüber ihrer Unterwalze, eine Lageveränderung durchführen können, d.h. momentan ihre Spaltweite ändern können.

Da diese Walzen dem Wesen nach massebehaftet sind, ist eine derartige momentane Anpassung stets mit Beschleunigungskräften einhergehend, die als Lagerreaktionen in den Lagern der Walzen selber und in den Gehäusewänden abgestützt werden müssen, die aber auch teils durchschlagen auf die Antriebs-, Führungs- und Verstellelemente der Oberwalzen. Je abrupter derartige Beschleunigungsvorgänge ablaufen, desto größer die momentane Beschleunigung und desto größer die momentanen Beschleunigungskräfte.

Es ist daher erforderlich, derartige Beschleunigungsvorgänge, welche auf die verstellbaren Walzen, und zumeist sind dieses die Oberwalzen, einwirken, zu bedämpfen. Dieses dient einerseits dem Kappen von Beschleunigungsspitzen, aber andererseits auch der Verbesserung der Laufruhe des Häckselaggregates insgesamt.

Insbesondere bei großem Durchsatz von großen Häckselgutmassenströmen kann es bei zu unruhigem Lauf der Vorpresswalzen zum Abriss des Erntegutstroms kommen, welches sofort zu Verstopfungen des Förderkanals des Einzugsgehäuses führt. Hinzu kommt, dass die Wärmeenergie, welche im Bereich des Stoßdämpfers am Einzug des Häckslers durch die Dämpfung entsteht, dabei so groß werden kann, dass die Zylinderdichtungen, die der Kolbenstangen oder die zwischen Kolben und Zylinderwand, überhitzt und zerstört werden.

Hier setzt die Aufgabe der Erfindung an mit dem Ziel, einen Häcksler mit verbesserten Dämpfungseigenschaften für die schwingenden Bewegungen der Vorpresswalzen bei teils hohen und stark variierenden Massendurchsätzen vorzuschlagen.

**Aufgabe der Erfindung** ist es, ein Häckselaggregat zu schaffen, dessen Stoßdämpfer sich den unterschiedlichen Betriebsbedingungen schnell und besser anpassen können.

**Gelöst wird die Aufgabe der Erfindung** mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Ein Häckselaggregat nach der Erfindung ist mit wenigstens einem hydraulischen Stoßdämpfer mit Ölumlaufkühlung bzw. einem Kühlkreislauf ausgestattet, wobei der hydraulische Kühlkreislauf den hydraulischen Stoßdämpfer zur Kühlung des Dämpfungsmediums durchströmt. Dies bedeutet, dass das Dämpfungsmedium des Stoßdämpfers und das Medium des Kühlkreislaufs sich im Zylindergehäuse des Stoßdämpfers miteinander vermischen und die Wärmeabfuhr zur Regelung des Energiehaushalts des Stoßdämpfers durch Konvektion des Kühlkreislaufs erfolgt.

Demzufolge erfolgt die Dämpfung mittels eines hydrostatischen Stoßdämpfers, ausgebildet als Kolbenzylindereinheit mit zwei Kolbenstangenräumen mit durchgehender Kolbenstange, wobei das von dem Kolben verdrängte Öl dabei durch den umlaufenden Spalt zwischen Kolben und Zylinder als Kühlkreislauf von einem Kolbenstangenraum in den anderen fließt. Dabei befinden sich am Anschluss des Zylindergehäuses zwei Anschlussstutzen für einen Niederdruckkreislauf, ein Zu- und ein Ablaufstutzen, denen ein Drosselelement oder eine Blende vorgelagert ist, so dass ständig eine geringe Menge Öl den hydraulischen Stoßdämpfer durchströmt. Dieser Ölfluß findet ständig und stetig statt, d.h. sowohl im Stillstand als auch während der Bewegung des Kolbens innerhalb des Stoßdämpferzylinders des Stoßdämpfers. Die durch den Dämpfungsvorgang erzeugte Wärmeenergie wird durch den Ölstrom und damit durch Konvektion aus dem Stoßdämpfer in den Tank abtransportiert und einem Kühlprozess ausgesetzt. Indem nun die Wärmeenergie durch den umlaufenden Ölstrom, der die gesamte Mantelfläche des Kolbens stetig umströmt, abtransportiert wird, wird die Öltemperatur niedrig gehalten, wodurch die Dichtungseinheiten, sowohl die des Kolbens, als auch die der Kolbenstangendichtungen, vor Überhitzung und Zerstörung geschützt werden. Die Durchflußmenge des Kühlkreislaufs wird dabei durch Drosselelemente, eingebaut in den Anschlussstutzen des hydraulischen Stoßdämpfers, vorgegeben.

In einer weiteren Ausgestaltung der Erfindung ist es auch möglich, den Kühlkreislauf hinsichtlich seiner Durchflussmenge, seines Eingangsdrucks und seiner Temperatur zu steuern oder zu regeln, welches Einfluss auf das Dämpfungsverhalten und damit auf die Dämpfungskonstante des Stoßdämpfers nimmt. Dieses kann dazu dienen, bei unterschiedlichen Belastungen des Häckslers durch unterschiedliche Einsatzbedingungen, abhängig vom Häckselgut und dem Massendurchsatz, das Dämpfungsverhalten des Stoßdämpfers zu variieren. Durch unterschiedliche Temperaturen des Dämpfungsmediums kann die Temperaturabhängigkeit der Ölviskosität genutzt werden, um die Dämpfungskonstante des Stoßdämpfers zu variieren.

Dazu kann beispielsweise der Kühlkreislauf mit einem Ölkühler ausgestattet sein, der mit einem Temperaturfühler und einem Temperaturregler ausgestattet ist. In einer weiteren Ausgestaltung kann dieser Kühlkreislauf auch mit einer temperaturgesteuerten Durchflußregelung und in besonderer weise mit einer Variation des Eingangsdrucks des Kühlkreislaufs, z. B. durch Regelpumpen ausgestattet sein. Diese Variation kann beispielsweise mittels eines µ-Prozessors gesteuert oder geregelt werden.

### Ausführungsbeispiel

- Fig.1: ein vereinfacht dargestelltes Häckselaggregat in einer Seitenansicht mit minimal eingestelltem Einzugs- und Pressspalt.
- Fig.2: ein vereinfacht dargestelltes Häckselaggregat in einer Seitenansicht mit etwa maximal eingestelltem Einzugs- und Pressspalt.
- Fig.3: einen vergrößert dargestellten Ausschnitt aus Fig.1
- Fig.4: einen vergrößert dargestellten Ausschnitt aus Fig.2
- Fig.5: einen hydraulischen Stoßdämpfer nach der Erfindung in einer mittleren Stellung
- Fig.5a: einen hydraulischen Stoßdämpfer nach der Erfindung in der zusammengefahrenen Stellung
- Fig.5b: einen hydraulischen Stoßdämpfer nach der Erfindung in der auseinander gefahrenen Stellung
- Fig.6: hydraulischer Schaltplan für einen offenen Kühlkreislauf

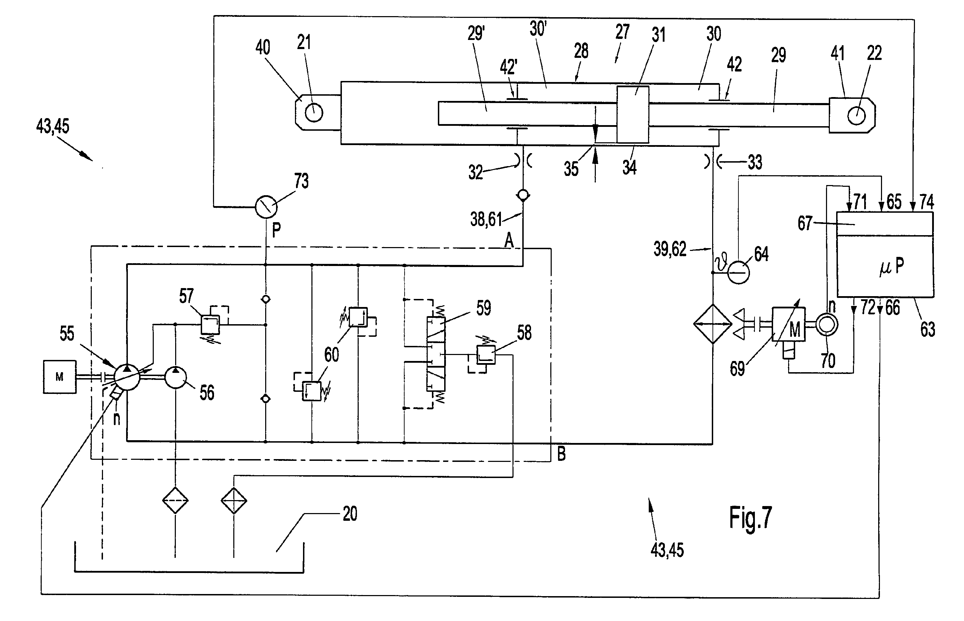

- Fig.7: hydraulischer Schaltplan für einen geschlossenen Kühlkreislauf
- Fig.8: hydraulischer Schaltplan für einen offenen Kühlkreislauf für zwei Stoßdämpfer in Parallelschaltung

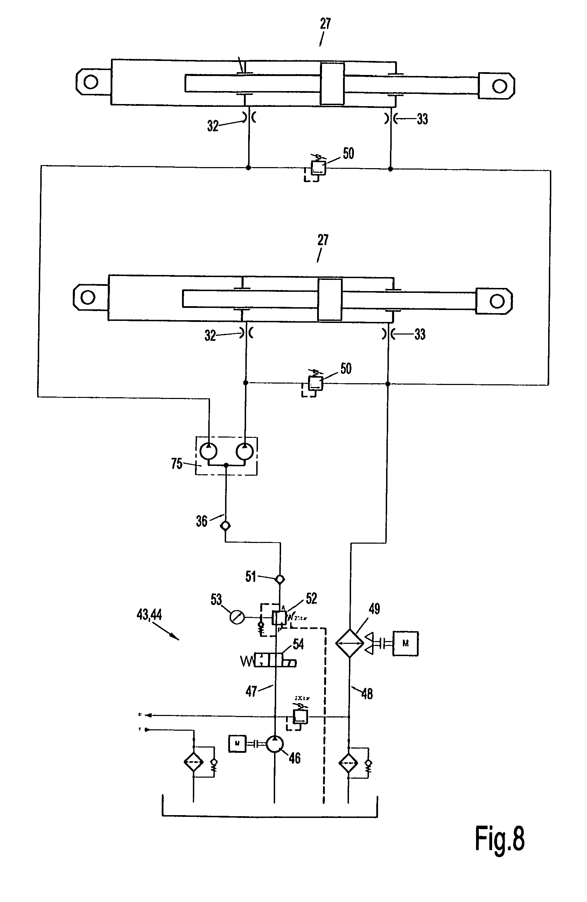

- Fig.8: hydraulischer Schaltplan für einen geschlossenen Kühlkreislauf für zwei Stoßdämpfer in Parallelschaltung

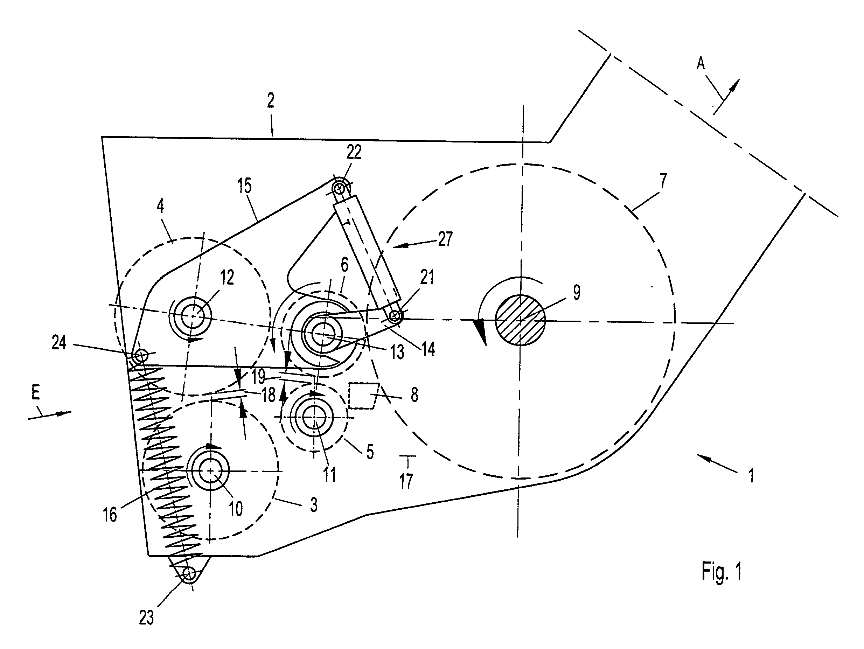

In Fig.1 ist ein vereinfacht dargestelltes Häckselaggregat 1 in einer Seitenansicht mit minimal eingestellter Einzugsspaltweite 18 und minimal eingestellter Pressspaltweite 19 dargestellt. In dem Häckslergehäuse 2 ist die Antriebswelle 9 mit der mit Häckslermessern bestückten Häckseltrommel 7 in den Seitenwänden dreh- und antreibbar gelagert. Aus Gründen der Übersichtlichkeit ist die Häckseltrommel 7 lediglich durch ihre Außenkontur als Hüllkreis dargestellt. Die Gegenschneide 8 ist ebenfalls an den Seitenwänden des Häckslergehäuses 2 abgestützt. Häckselaggregate 1 dieser Art sind dabei gleichzeitig als Häckslergebläse ausgebildet, so dass der zu häckselnde Gutstrom, der durch den Einzugsspalt im Einzugsbereich E in bekannter weise in das Häckslergehäuse eintritt, nach dem Passieren der Häckseltrommel das Häckselaggregat durch den Vorlauf A, ebenfalls in bekannter weise, wieder verlässt.

Im vorderen und offenen Einzugsbereich E des Häckslergehäuses 2 befinden sich die untere Einzugswalze 3 und obere Einzugswalze 4, welche den Einzugsspalt mit seiner Einzugsspaltweite 18,18' definieren. Zwischen den Einzugswalzen 3 und 4 und der Häckseltrommel 7 befindet sich die untere Presswalze 5 und obere Presswalze 6, die den Pressspalt mit seiner Pressspaltweite 19,19' definieren.

Die untere Einzugswalze 3 und die untere Presswalze 5 sind fest in den Lagern 10 und 11 der seitlichen Gehäusewände des Häckslergehäuses 2 eingebunden, wohin gegen die obere Einzugswalze 4 und die obere Presswalze 6 in den Lagern 12 und 13 in festgelegtem Abstand zueinander, jedoch schwenkbeweglich, in einer beidseitig außerhalb des Häckslergehäuses 2 in je einer Lagerschwinge 15 gelagert sind. Die Schwenkbeweglichkeit bezieht sich dabei zum einen auf eine mögliche Schwenkbewegung um die Achse des Lagers 13 und anderseits auch um eine weitere Schwenkbeweglichkeit um die Schwenkachse des Anschlagspunktes 21 der Einfachschwinge 14, wobei die Einfachschwinge 14 beidseits des Häckslergehäuses 2 außerhalb der Seitenwände 17 fest an diesen drehbar gelagert ist. Einfachschwinge 14 und Lagerschwinge 15 sind gleichzeitig in dem Lager 13 schwenkbeweglich zueinander gekoppelt.

Die Lagerschwinge 15 ist mittels einer Zugfeder 16, die zum einen in dem Anschlagpunkt 23 am Häckslergehäuses 2 und zum anderen im Anschlagpunkt 24 an der Lagerschwinge 15 selbst befestigt ist, mit einem Drehmoment um die Achse des Lagers 13, aber auch mit einem Drehmoment um die Schwenkachse des Anschlagpunktes 21 beaufschlagt.

Ebenfalls im Anschlagpunkt 21 ist ein hydraulischer Stoßdämpfer 27 drehbeweglich um diesen angeschlagen, wobei dieser am anderen Ende in dem Anschlagpunkt 22 drehbeweglich mit der Lagerschwinge 15 angeschlagen und verbunden ist. Die Drehrichtungen der rotierend angetriebenen Einzugswalzen 3,4 bzw. Presswalzen 5 und 6, sowie die der Häckseltrommel 7, sind durch Drehrichtungspfeile gekennzeichnet.

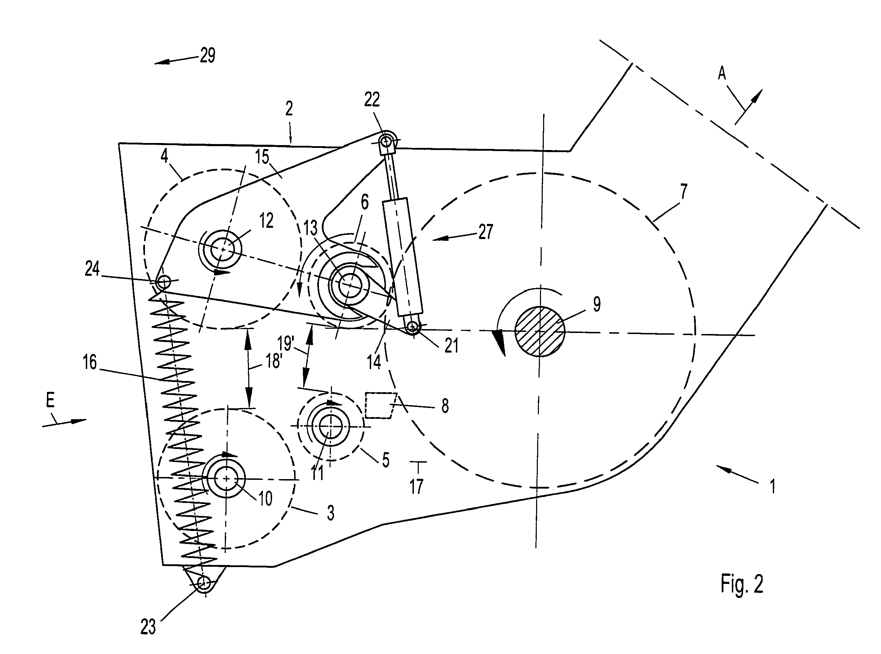

In Fig. 2 ist analog Fig.1 die gleiche Situation dargestellt, nunmehr aber mit etwa maximalen Spaltweiten, d.h. maximaler Einzugsspaltweite 18' und maximaler Pressspaltweite 19'. Dieses entspricht einer Situation im laufenden Häckselbetrieb, bei dem der durch den Einzugsspalt des Einzugbereichs E eintretende Gutstrom des noch zu häckselnden Futters infolge seiner teils durch die Einzugswalzen 3,4 bzw. Presswalzen 5,6 verdichteten Masse, Aktionskräfte auf die Einzugswalzen 3,4 bzw. Presswalzen 5,6 ausübt, welche als Reaktionskräfte auf die Zugfeder 16 bzw. den Anschlagpunkt 21 am Häckslergehäuse 2 abgestützt werden. Dabei erfährt die Zugfeder 16 entsprechend den momentanen Gegebenheiten eine Verlängerung gegenüber der in Fig. 1 dargestellten Situation, welches auch eine Vergrößerung der Vorspann- bzw. Reaktionskräfte bedeutet, wie weiter oben angesprochen.

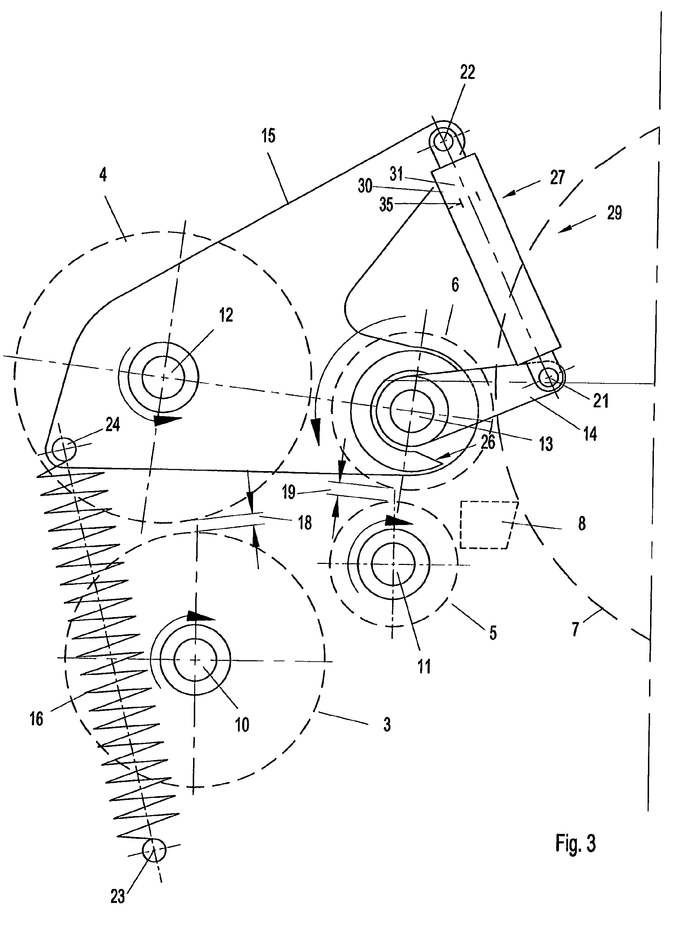

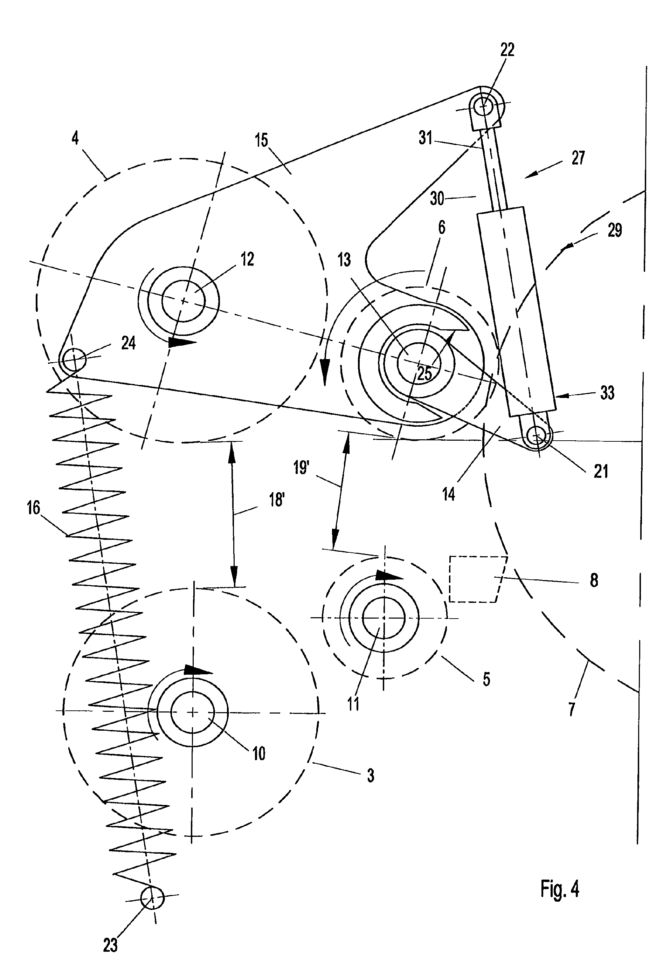

In. Fig. 3 und Fig. 4 sind die wesentlichen Elemente der Fig. 1 bzw. Fig.2 zur besseren Verdeutlichung vergrößert dargestellt. Um den Gelenkpunkt im Lager 13 sind zwei Anschläge, ein oberer Anschlag 25 und ein unterer Anschlag 26 als fester Bestandteil der Lagerschwinge 15 angeordnet. Diese Anschläge 25,26 umschließen die Einfachschwinge 14 derart, dass diese zwar Schwenkbewegungen um die Drehachse des Lagers 13 zulassen, jedoch eben nur im Rahmen dessen, was die Lage der Anschläge zulassen. Somit können die obere Einzugswalze 4 und die obere Presswalze 6, solange der Anschlag 25 an der Einfachschwinge 14 anliegt, nur gemeinsam nach oben, dem laufenden Gutstrom durch seine verdrängende Wirkung verursachenden Aktionskraft folgend, ausweichen. Die sich der Bewegungsrichtung entgegenstellende Reaktionskraft ist somit maßgeblich bestimmt durch die Federkräfte der Zugfedern und durch die Beschleunigungskräfte infolge der Massenträgheit der Einzugs- und Presswalzen.

Dem Vorgang der Gutstromförderung werden somit Schwingungsvorgänge überlagert, die um Resonanzkatastrophen zu vermeiden, bedämpft werden. Bedämpft werden diese Beschleunigungsvorgänge von einem hydraulischen Stoßdämpfer 27, wobei diese Bedämpfung bekanntlich auf der inneren Reibung des Dämpfungsmediums 20 Hydrauliköl beruht.

Stellt sich nunmehr die Situation ein, dass bei angehobenen Presswalzen der Gutstrom in seiner Masse momentan rückläufig ist, hingegen die Presswalzen noch kein rückläufiges absenken erlauben, so kann die vorgelagerte obere Einzugswalze bereits eine abwärtsgerichtete Schwenkbewegung um die Achse des Lagers 13 ausführen, innerhalb der Grenzen, die der untere Anschlag 26 zulässt. Die Folge dieser Ausgestaltung der Anbringung des hydraulischen Stoßdämpfers 27 ist, dass sowohl die aufwärtsgerichteten, als auch die abwärtsgerichteten und teilweise entkoppelten Bewegungsvorgänge beider Oberwalzen 4 und 6, von der bedämpfenden Wirkung des Stoßdämpfers erfasst werden.

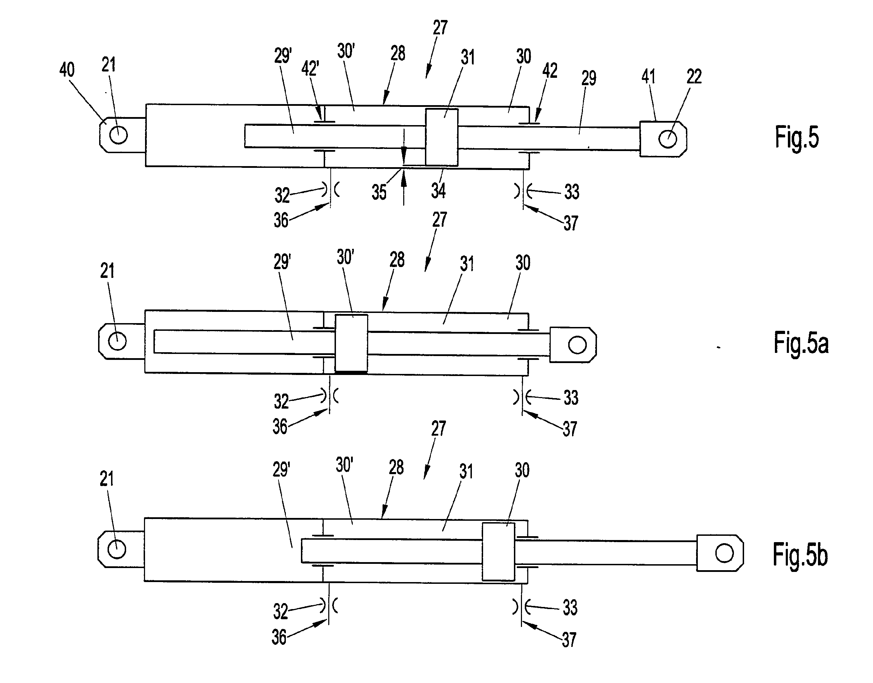

Fig.5 zeigt einen hydraulischen Stoßdämpfer 27 nach der Erfindung in einer mittleren, Fig.5a in der zusammengefahrenen und Fig.5b in der auseinander gefahrenen Stellung. Der hydraulische Stoßdämpfer besteht im Wesentlichen aus dem Zylindergehäuse 28, der durchgehenden Kolbenstange 29,29' mit dem sie verbindenden Kolben 31, der die Kolbenstangenräume 30;30' voneinander abtrennt, den Anschlussstutzen 36,37 für die Spülleitungen 38,39 und den Drosselelementen 32,33. Die austretende Kolbenstange 29 nimmt endseitig einen Anschlagkopf 40 für den Anschlagpunkt 22 und das Zylindergehäuse28 nimmt endseitig den Anschlagkopf 41 für den Anschlagpunkt 21 auf. Der hydraulische Stoßdämpfer 27 mit der durchgehenden Kolbenstange gleicht somit einem Gleichgangzylinder, dessen Kolbenstangen 29,29' von den Kolbenstangenführungen 42,42' mit den nicht näher dargestellten Abdichtungen aufgenommen werden. Erfindungsgemäß weist der Kolben 31 gegenüber der Wandung des Zylindergehäuses 28 einen umlaufenden Spalt 34 mit der Spaltbreite 35 auf. Durch einen vorgesehenen Spülkreislauf, der nachfolgend näher beschrieben ist, kann das Hydrauliköl des Spülkreislaufs 43 den Kolben 31 umspülen und somit die Wärmeenergie durch Konvektion aus dem hydraulischen Stoßdämpfer 27 abführen.

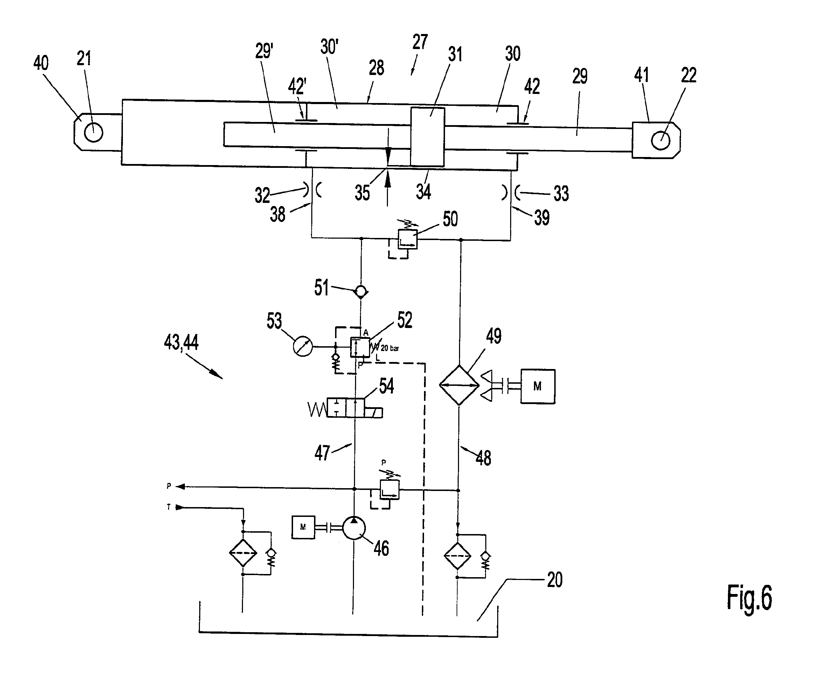

Fig.6 zeigt einen hydraulischen Schaltplan für einen Spülkreislauf 43 für den hydraulischen Stoßdämpfer 27 mit einem offenen hydraulischen Kühlkreislauf 44. Der Kühlkreislauf 44 besteht im Wesentlichen aus den Elementen Hydraulkpumpe 46, Druckleitung 47, Tankrücklaufleitung 48, Ölkühler 49, Druckbegrenzungsventil 50, Rückschlagventil 51, Druckreduzierventil 52, dem Manometer 53 und den Drosselelementen 32,33. In dem ausgeführten Beispiel ist unterstellt, dass es sich dabei um ein bereits vorhandenes hydraulisches System mit einem Arbeitskreislauf mit dem Vorlauf A und dem Rücklauf B handelt, beispielsweise für einen Arbeitsdruck von 200 bar, wobei dieses vorhandene hydraulische System für den offenen Kühlkreislauf 44 angezapft ist über das Druckreduzierventil 52, beispielsweise mit einem Arbeitsdruck von 20 bar als hydraulisches Niederdrucksystem. In der Druckleitung 47 befindet sich ein elektrisch ansteuerbares 2-2 Wegeventil 54 mit dem der Kühlkreislauf 44 freigeschaltet oder gesperrt werden kann. Der Kolben 31 und die Kolbenstange 29,29' des hydraulischen Stoßdämpfers 27 sind hydraulisch eingespannt zwischen den Drosselelementen 32,33 und dem Druckbegrenzungsventil 50, wobei das Hydrauliköl des Kühlkreislaufs ebenso wie das durch die Kolbenbewegungen zu verdrängende Hydrauliköl durch den umlaufenden Spalt 34 an dem Kolbenumfang vorbei strömen kann. Dem überlagert wird ein kontinuierlich fließender Hydraulikölstrom des Spülkreislaufs 43, ausgehend vom Anschlussstutzen 36 in Richtung Anschlussstutzen 37 des Zylindergehäuses 28, der die Wärmeenergie aus dem hydraulischen Stoßdämpfer 27 in Richtung Hydrauliköltank abführt. Reicht die vorhandene Kühlung des gesamten Hydrauliksystems nicht aus, so kann ein zusätzlicher Ölkühler 49 dieses übernehmen.

Fig.6 zeigt ein Ausführungsbeispiel für einen hydraulischen Schaltplan für einen Spülkreislauf 43 für den hydraulischen Stoßdämpfer 27 mit einem geschlossenen hydraulischen Kühlkreislauf 45. In dem Ausführungsbeispiel handelt es sich um eine elektrisch ansteuerbare druckgeregelte Verstellpumpe 55 als Hydraulikpumpe für den geschlossenen Kreislauf. Es handelt sich dabei um eine komplette Baueinheit mit der Ladepumpe 56 und deren Druckbegrenzungsventil 57, dem Druckbegrenzungsventil 58 für die Systemdruckbegrenzung und dessen Vorsteuerventil 59 und der Druckspitzenabschneidung 60. Letztere besteht aus zwei Druckbegrenzungsventilen, deren Funktionsweise dem Fachmann bekannt ist. Am Vorlauf A liegt die Vorlaufleitung 61 und am Rücklauf B liegt die Rücklaufleitung 62 des Spülkreislaufs 43 an. Die Funktionsweise des Stoßdämpfers 27 und des Abtransports der Wärmeenergie aus dem Stoßdämpfer 27 erfolgt auf die gleiche Weise wie zuvor im offenen Kreislauf beschrieben.

Dieses Ausführungsbeispiel beschreibt die Regelbarkeit des Kühlkreislaufs 45 und damit den Beharrungszustand des Energiehaushalts des Stoßdämpfers 27 durch die elektrische Ansteuerung der Verstellpumpe 55 durch den µ-Prozessor 63 und des Ölkühlers 68.

Indem der Systemdruck P der Verstellpumpe 55 temperaturabhängig veränderbar ist, kann gleichzeitig die Durchflußmenge an den Drosselelementen 32,33 verändert werden und somit Einfluss auf den Energiehaushalt des hydraulischen Stoßdämpfers 27 genommen werden, bzw. die Durchflussmenge genutzt werden, um die Systemtemperatur δ als Betriebstemperatur des hydraulischen Stoßdämpfers 27 konstant zu halten. Zu diesem Zweck wird die Temperatur des ablaufenden Ölstroms vom Thermostaten 64 erfasst und dieses mittels eines ersten Eingangssignals 65 dem µ-Prozessor 63 zugeführt und mit einem gespeicherten Sollwert im Sollwertspeicher 67 verglichen. Kommt es dabei zu Abweichungen vom Sollwert der vorgegebenen Systemtemperatur δ, so kann in einem ersten Schritt die Durchflußmenge des Kühlkreislaufs 45 durch Veränderung des Volumenstroms variiert werden. Dieses geschieht durch eine Veränderung des ersten Ausgangssignals 66 des µ-Prozessors 63, welches nunmehr anliegend an der Verstellpumpe 55 den Betriebsdruck P verändert. Der Betriebsdruck P wird sensorisch durch einen Drucksensor 73 erfasst und dem µ-Prozessor 63 als drittes Eingangssignal 74 zugeführt.

Alternativ und/oder zusätzlich ist es auch möglich, die Kühlleistung am Ölkühler 68 durch Variation der Antriebsdrehzahl n des Lüftermotors 69 des Lüfterflügels zu verändern und der gegebenen Situation anzupassen. Die Antriebsdrehzahl n des Lüftermotors 69 ist ebenfalls im Sollwertspeicher 67 hinterlegt und die Istdrehzahl des Lüftermotors 69 wird sensorisch durch den Drehzahlsensor 70 erfasst und liegt am Eingang des µ-Prozessors 63 als zweites Eingangssignal 71 an.

Der angestrebte Beharrungszustand des Energiehaushalts unter den Betriebsbedingungen des Häckslers und damit der Betriebstemperatur des hydraulischen Stoßdämpfers 27, ist im Programmspeicher des µ-Prozessors 63 durch einen externen Sollwertgeber in der Fahrerkabine vorgebbar und gespeichert. Die Verknüpfung der Eingangssignale 65,71,74 in Bezug auf den angestrebten Beharrungszustand des Energiehaushalts des hydraulischen Stoßdämpfers 27, erfolgt nun in der Weise, dass der µ-Prozessors 63 ein zweites Ausgangssignal 72 generiert, welches die Drehzahl des Lüftermotors 69 vorgibt und damit Einfluss auf die Kühlleistung des Ölkühlers 68 nimmt. Alternativ kann die Fördermenge des Ölkreislaufs auch von einer Druck- und Förderstrom geregelten Hydraulikpumpe sowohl im offenen, als auch im geschlossenen Kreislauf variiert werden.

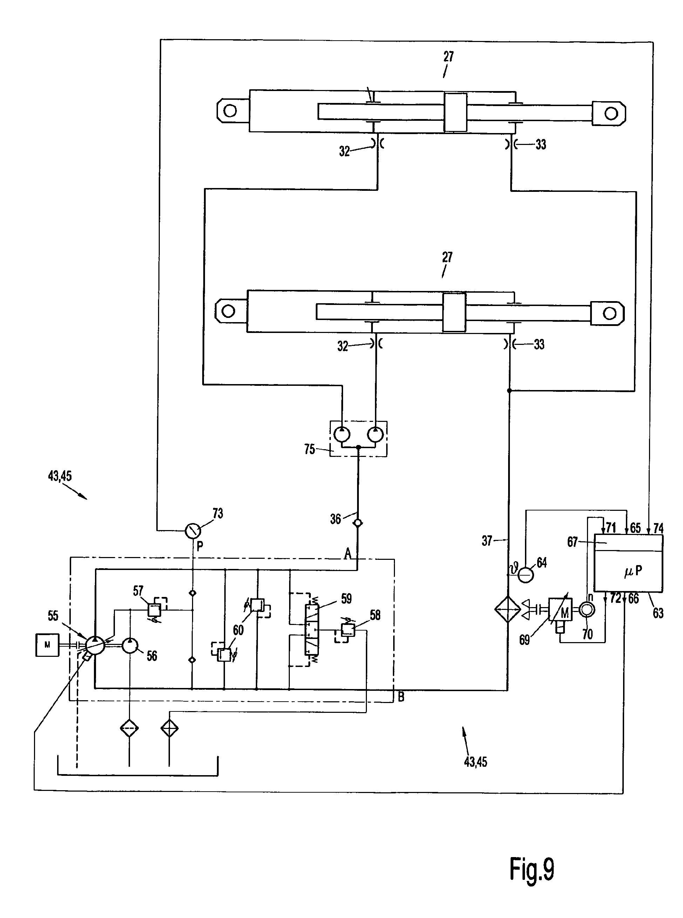

Fig.8 zeigt einen hydraulischen Schaltplan für einen offenen Kühlkreislauf für zwei Stoßdämpfer in Parallelschaltung, hydraulisch verbunden durch einen Mengenteiler und Fig.9 anlog den hydraulischen Schaltplan für einen geschlossenen Kühlkreislauf für zwei Stoßdämpfer ebenfalls in Parallelschaltung, hydraulisch verbunden durch einen Mengenteiler. Diese Anordnung ist dann gegeben, wenn beidseitig des Einzugskanals die Einzugs- und Presswalzen mittels Federn vorgespannt sind und die Einzugs- und Presswalzen mittels hydraulischer Stoßdämpfer 27 bedämpft werden.

Mit der Möglichkeit der fernbedienbaren externen Sollwertvorgabe aus der Fahrerkabine heraus kann der Fahrer die Bedämpfung der Einzugs- und Presswalzen des Häckslers auf unterschiedliche Einsatzbedingungen einstellen und steuern. Dabei spielt der Temperaturhaushalt der ölhydraulischen Stoßdämpfer eine bedeutende Rolle und dieser kann erfindungsgemäß durch die Variation der Parameter Druck, Temperatur und Durchflußmenge des Spülkreislaufs erfindungsgemäß gesteuert und/oder geregelt werden.

### Bezugszeichenliste

- 1: Häckselaggregat
- 2: Häckslergehäuse
- 3: untere Einzugswalze
- 4: obere Einzugswalze
- 5: untere Presswalze
- 6: obere Presswalze
- 7: Häckseltrommel
- 8: Gegenschneide
- 9: Antriebswelle
- 10: Lager
- 11: Lager
- 12: Lager
- 13: Lager
- 14: Einfachschwinge
- 15: Lagerschwinge
- 16: Zugfeder
- 17: Seitenwand
- 18,18': Einzugsspaltweite
- 19,19': Pressspaltweite
- 20: Dämpfungsmedium, Hydrauliköl
- 21: Anschlagpunkt
- 22: Anschlagpunkt
- 23: Anschlagpunkt
- 24: Anschlagpunkt
- 25: oberer Anschlag
- 26: unterer Anschlag
- 27: hydraulischer Stoßdämpfer
- 28: Zylindergehäuse
- 29,29': Kolbenstange
- 30,30': Kolbenstangenraum
- 31: Kolben
- 32: Drosselelement
- 33: Drosselelement
- 34: umlaufender Spalt
- 35: Spaltbreite
- 36: Anschlussstutzen
- 37: Anschlussstutzen
- 38: Spülleitung
- 39: Spülleitung
- 40: Anschlagkopf
- 41: Anschlagkopf
- 42,42': Kolbenstangenführung
- 43: Spülkreislauf
- 44: offener Kühlkreislauf
- 45: geschlossener Kühlkreislauf
- 46: Hydraulikpumpe
- 47: Druckleitung
- 48: Tankrücklaufleitung
- 49: Ölkühler
- 50: Druckbegrenzungsventil
- 51: Rückschlagventil
- 52: Druckreduzierventil
- 53: Manometer
- 54: 2-2 Wegeventil
- 55: Hydraulikpumpe, Verstellpumpe,
- 56: Ladepumpe
- 57: Druckbegrenzungsventil
- 58: Druckbegrenzungsventil
- 59: Vorsteuerventil
- 60: Druckspitzenabschneidung
- 61: Vorlaufleitung
- 62: Rücklaufleitung
- 63: µ-Prozessor, (µ-P)
- 64: Thermostat
- 65: erstes Eingangssignal
- 66: erstes Ausgangssignal
- 67: Sollwertspeicher
- 68: Ölkühler
- 69: Lüftermotor
- 70: Drehzahlsensor
- 71: zweites Eingangssignal
- 72: zweites Ausgangssignal
- 73: Drucksensor
- 74: drittes Eingangssignal
- 75: Mengenteiler

- n: Antriebsdrehzahl
- δ: Systemtemperatur, Betriebstemperatur
- A: Vorlauf
- B: Rücklauf
- E: Einzugsbereich, Eingang, Eingangsseite
- P: Systemdruck, Betriebsdruck

## Patentansprüche

1. Häckselaggregat (1) für selbstfahrende Erntemaschinen, bestehend aus einem Häckslergehäuse (2) mit wenigstens zwei Einzugswalzen, einer oberen und einer unteren Einzugswalze (3,4), welche die Einzugsspaltweite (18,18') begrenzen, und wenigstens zwei Presswalzen, einer oberen und einer unteren Presswalze (5,6), welche die Pressspaltweite (19,19') begrenzen, mit einer umlaufend rotierenden mit Messern besetzten Häckseltrommel (7), wobei die Einzugswalzen (3,4) und die Presswalzen (5,6) sich dem momentanen Gutstrom folgend durch unterschiedliche Einzugsspaltweiten (18,18') bzw. Pressspaltweiten (19,19') anpassen können und wobei die Anpassbewegungen der Einzugs- und Presswalzen (3,4,5,6) von wenigstens einem hydraulischen Stoßdämpfer bedämpft werden, **dadurch gekennzeichnet, dass** das Häckselaggregat (1) wenigstens einen hydraulischen Stoßdämpfer (27) mit einem hydraulischen Kühlkreislauf (44;45) aufweist.

2. Häckselaggregat (1) nach Anspruch 1, **dadurch gekennzeichnet, dass** der hydraulische Kühlkreislauf (44;45) sich mit dem Dämpfungsmedium des hydraulischen Stoßdämpfers (27) vermischt und diesen dabei durchströmt.

3. Häckselaggregat (1) nach Anspruch 1, **dadurch gekennzeichnet, dass** der hydraulische Kühlkreislauf als offener Kühlkreislauf (44) ausgelegt ist.

4. Häckselaggregat (1) nach Anspruch 1, **dadurch gekennzeichnet, dass** der hydraulische Kühlkreislauf als geschlossener Kühlkreislauf (45) ausgelegt ist.

5. Häckselaggregat (1) nach Anspruch 3 oder 4, **dadurch gekennzeichnet, dass** mittels des Kühlkreislaufs (44;45) die Systemtemperatur (δ) und damit die Dämpfungskonstante des hydraulischen Stoßdämpfers (27) konstant gehalten oder variiert werden kann.

6. Häckselaggregat (1) nach Anspruch 4, **dadurch gekennzeichnet, dass** die Systemtemperatur (δ) des Kühlkreislaufs (44;45) als konstante oder variable Führungsgröße zur Steuerung und/oder Regelung der Dämpfungskonstante des hydraulischen Stoßdämpfers (27) genutzt werden kann.

7. Häckselaggregat (1) nach Anspruch 4, **dadurch gekennzeichnet, dass** der Systemdruck (P) des Kühlkreislaufs (44;45) als konstante oder variable Führungsgröße zur Steuerung und/oder Regelung der Dämpfungskonstante des hydraulischen Stoßdämpfers (27) genutzt werden kann.

8. Häckselaggregat (1) nach Anspruch 6 und 7, **dadurch gekennzeichnet, dass** die Dämpfungskonstante des hydraulischen Stoßdämpfers (27) durch die Variation der Systemtemperatur (δ) und des Systemdrucks (P) des Kühlkreislaufs (44,45) variiert werden kann.

9. Häckselaggregat (1) nach wenigstens einem der Ansprüche 5 bis 8, **dadurch gekennzeichnet, dass** die Dämpfungskonstante des hydraulischen Stoßdämpfers (27) in Verbindung mit einem µ-Prozessor (63) variiert, gesteuert oder geregelt werden kann.

10. Häckselaggregat (1) nach Anspruch 9, **dadurch gekennzeichnet, dass** die Dämpfungskonstante des hydraulischen Stoßdämpfers (27) durch einen externen Sollwertgeber in der Fahrerkabine variiert werden kann.

11. Häckselaggregat (1) in Verbindung mit einem oder mehreren der Ansprüche 2 bis 9, **dadurch gekennzeichnet, dass** die Hydraulikpumpe (46,55) des Kühlkreislaufs (44,45) eine druck-, förderstrom- oder druck- und förderstromgeregelte Hydraulikpumpe ist.

12. Häckselaggregat (1) in Verbindung mit einem oder mehreren der Ansprüche 2 bis 9, **dadurch gekennzeichnet, dass** die Durchflußmenge des Kühlkreislaufs durch Drosselelementen (32,33), eingebaut in den Anschlussstutzen (36,37) des hydraulischen Stoßdämpfers (27), vorgegeben ist
